# FASCICULE DE BREVET EUROPEEN

(11) **EP 0 668 557 B1**
(45) Date de publication et mention de la délivrance du brevet: **05.07.2000**
(21) Numéro de dépôt: 95410010.3
(22) Date de dépôt: 15.02.1995
(51) Int. Cl.: G06F 7/00

(54) **Circuit et procédé de réorganisation de données**
Datenreorganisationsschaltung und Verfahren
Data reorganization circuit and method

(30) Priorité: 16.02.1994 FR 9402071
(43) Date de publication de la demande: 23.08.1995
(73) Titulaire: STMicroelectronics S.A., 94250 Gentilly (FR)
(72) Inventeur: Artieri, Alain, F-38240 Meylan (FR)
(74) Mandataire: de Beaumont, Michel

(56) Documents cités:
- EP-A- 0 250 976
- US-A- 4 393 444

## Description

La présente invention concerne les circuits permettant de fournir dans un deuxième ordre prédéterminé des données arrivant au circuit dans un premier ordre prédéterminé.

De tels circuits utilisent généralement une mémoire à double accès, c'est-à-dire une mémoire dans laquelle on peut écrire à l'aide d'un bus d'entrée et un premier bus d'adresses et dans laquelle on peut lire, pratiquement simultanément aux écritures, à l'aide d'un bus de sortie et d'un deuxième bus d'adresses.

Dans des circuits de réorganisation de données classiques, on commence par remplir la mémoire selon un premier ordre avant de comnencer à la vider dans un deuxième ordre. En effet, puisque les ordres d'entrée et de sortie des données sont généralement distincts et quelconques, on ne sait pas, au moment où l'on veut lire une donnée, si cette dernière a effectivement été écrite. Ainsi, un inconvénient d'un tel circuit est qu'il présente un retard de réponse, ou temps de latence, égal au nombre de cycles d'écriture qu'il faut pour remplir la mémoire.

Un objet de la présente invention est de prévoir un circuit de réorganisation de données à mémoire à double accès, qui autorise la lecture de la mémoire à l'instant précis où au moins une donnée qui peut être lue est présente dans la mémoire.

En atteignant cet objet, l'invention permet, selon les ordres d'entrée et de sortie des données, de lire des données dans la mémoire avant que celle-ci soit remplie.

Cet objet est atteint grâce à un procédé de réorganisation de données, comprenant les étapes d'écrire les données dans une mémoire à double accès dans un premier ordre prédéterminé et de lire les données dans la mémoire dans un deuxième ordre prédéterminé. A chaque écriture d'une donnée courante, un registre est incrémenté d'un incrément dont la valeur optimale est égale à 1 plus la différence entre le rang d'entrée de la donnée et le rang de sortie de cette donnée, et nulle si la différence est négative, la valeur effective de cet incrément étant telle que la somme des incréments utilisés jusqu'à l'écriture de la donnée courante est inférieure ou égale à la somme des valeurs optimales de ces incréments. La lecture des données est autorisée seulement si le contenu du registre est non nul et le registre est décrémenté à chaque lecture.

Selon un mode de réalisation de la présente invention, le procédé comprend l'étape d'interdire l'écriture des données entre l'instant où l'écriture d'un paquet de données se termine et l'instant où la lecture de ce paquet de données se termine.

La présente invention vise également un circuit de réorganisation de données, comprenant une mémoire à double accès couplée à un système pour écrire des données dans un premier ordre prédéterminé à l'aide d'un premier bus et pour lire ces données dans un deuxième ordre prédéterminé à l'aide d'un deuxième bus. Un registre est connecté au circuit pour autoriser les lectures de la mémoire seulement si le contenu du registre est non nul. Des moyens sont prévus pour décrémenter le contenu du registre à chaque lecture d'une donnée dans la mémoire. Un décodeur des adresses présentes sur le premier bus fournit un incrément dont la valeur optimale est égale à 1 plus la différence entre le rang d'entrée de la donnée courante présentée sur le premier bus et le rang de sortie de cette donnée, et nulle si la différence est négative, la valeur effective de cet incrément étant telle que la somme des incréments utilisés jusqu'à l'écriture de la donnée courante est inférieure ou égale à la somme des valeurs optimales de ces incréments. Un sommateur ajoute l'incrément au contenu du registre à chaque écriture.

Selon un mode de réalisation de la présente invention, le circuit comprend un compteur d'écriture incrémenté à chaque écriture d'une donnée et remis à zéro à la fin de chaque lecture d'un paquet de données, et des moyens pour inhiber les écritures tant que le compteur d'écriture est à sa valeur maximale.

Ces objets, caractéristiques et avantages ainsi que d'autres de la présente invention seront exposés dans la description suivante de modes de réalisation particuliers faite à titre non-limitatif à l'aide des figures jointes parmi lesquelles :
la figure 1 représente un mode de réalisation schématique d'un dispositif de réorganisation de données selon la présente invention ;
la figure 2 représente un chronogramme permettant d'illustrer le fonctionnement du circuit de la figure 1 ;
la figure 3 représente un macrobloc d'une image numérique constituant des données pouvant être traitées par un circuit de réorganisation selon l'invention ;
la figure 4 représente une insertion d'un circuit de réorganisation selon l'invention dans une chaîne de traitement de données d'image comprimées selon une norme MPEG ;
les figures 5A à 5D servent à illustrer quatre types de réorganisation effectués par un circuit selon l'invention dans le cadre d'un traitement de macroblocs d'image comprimés selon une norme MPEG ; et
la figure 6 représente un mode de réalisation de mémoire à double accès particulièrement avantageux dans le domaine du décodage MPEG.

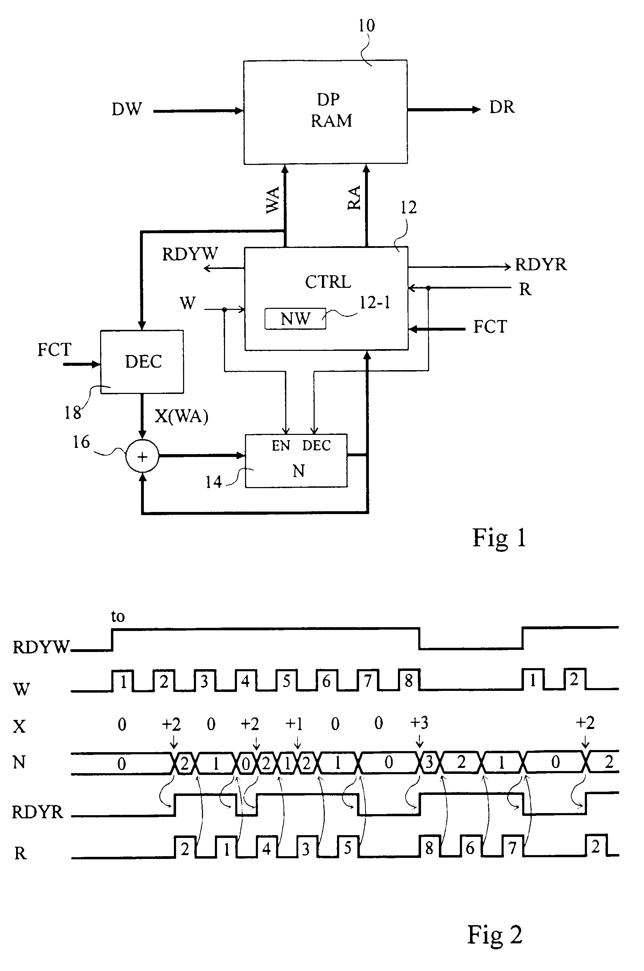

A la figure 1, des données à réorganiser sont écrites dans une mémoire à double accès 10 par un bus d'écriture DW. Les adresses d'écriture de ces données sont sélectionnées par un bus d'adresses d'écriture WA. Les données écrites dans la mémoire 10 sont relues sur un bus de lecture DR à des adresses sélectionnées par un bus d'adresses de lecture RA. Chaque écriture dans la mémoire 10 est validée par une horloge d'écriture W, et chaque lecture est validée par une horloge de lecture R.

Dans l'exemple de la figure 1, les adresses d'écriture WA et les adresses de lecture RA sont fournies par un circuit de commande 12 qui détermine la réorganisation des données. Par exemple, les adresses d'écriture WA sont incrémentées d'une unité au fur et à mesure que l'on écrit les données et les adresses de lecture RA varient de manière fixée quelconque pour déterminer l'ordre de lecture (ou de sortie) des données qui sont écrites dans la mémoire 10.

Généralement, les données sont réorganisées par paquets de longueur constante. La mémoire 10 est par exemple prévue pour contenir un paquet de données et les adresses d'écriture WA et de lecture RA évoluent selon des suites de période égale au nombre de données d'un paquet.

Le problème que vise à résoudre l'invention est la synchronisation de l'émission des adresses de lecture RA sur l'émission des adresses d'écriture WA de manière à lire une donnée dès que son tour de sortie est arrivé.

Pour cela, l'invention prévoit un registre 14 qui contient le nombre N de données disponibles à la lecture dans la mémoire 10, c'est-à-dire le nombre de données qui peuvent être lues dans le bon ordre. Ce nombre N est mis à jour à chaque écriture d'une donnée dans la mémoire 10 en ajoutant au nombre N un incrément X. Pour cela, par exemple, le registre 14 est validé par le signal d'écriture W et l'entrée du registre 14 reçoit, par l'intermédiaire d'un additionneur 16, la somme de la sortie du registre et de la valeur X(WA) fournie par un décodeur 18. Le décodeur 18 associe une valeur X à chaque adresse d'écriture WA. Chaque incrément X est égal à 1 plus la différence entre le rang d'entrée de la donnée couramment écrite et le rang de sortie de cette même donnée. Si cette différence est négative, l'incrément X est nul.

Les valeurs des incréments X tels que définis ci-dessus sont des valeurs optimales Xₒₚₜ. Pour que le circuit fonctionne, il suffit que la somme des incréments utilisés jusqu'à la donnée couramment écrite soit inférieure ou égale à la somme des incréments optimaux correspondants. En tout cas, la somme totale des incréments X utilisés pour un paquet de données est égale au nombre de données du paquet.

Le contenu du registre 14 est décrémenté d'une unité à chaque lecture dans la mémoire 10. Pour cela, on fournit par exemple le signal de lecture R à une entrée de décrémentation du registre 14. Le registre 14 peut être un décompteur recevant le signal de lecture R sur une entrée de décrémentation, le signal W sur une entrée de validation de chargement, et la sortie de l'additionneur 16 sur une entrée de chargement.

Le circuit de commande 12 reçoit le contenu du registre 14 pour déterminer l'activation de signaux de contrôle RDYW et RDYR. Le signal RDYW sert à indiquer à un circuit d'écriture, non représenté, que le circuit de réorganisation est prêt ou non à recevoir des données. Si le signal RDYW est activé, le circuit d'écriture active successivement le signal d'écriture W au fur et à mesure qu'il présente les données sur le bus DW. Les adresses d'écriture WA sont incrémentées par le circuit de commande 12 au rythme du signal d'écriture W.

Le signal RDYR sert à indiquer à un circuit de lecture, non représenté, que le circuit de réorganisation est prêt ou non à fournir des données. Lorsque le signal RDYR est actif, le circuit de lecture active successivement la ligne de lecture R au fur et à mesure qu'il lit les données présentes sur le bus DR. A chaque activation du signal de lecture R, le circuit de commande 12 modifie l'adresse de lecture RA de manière à fournir les données lues dans le bon ordre. La succession des adresses de lecture RA est prédéfinie en fonction de l'ordre dans lequel on veut lire les données dans la mémoire 10. Ces adresses sont par exemple stockées dans une mémoire adressée par un compteur qui est incrémenté par le signal de lecture R.

Le signal RDYR est actif lorsque le nombre N contenu dans le registre 14 est non nul. Ainsi, le signal RDYR est par exemple fourni par une porte OU recevant tous les bits du registre 14.

Le signal RDYW est actif dès qu'un paquet de données a été extrait de la mémoire 10. Pour générer ce signal RDYW, on utilise, par exemple, un compteur d'écriture 12-1 qui compte le nombre de données écrites dans la mémoire 10. Le signal RDYW est par exemple fourni par une bascule RS, non représentée, mise à 0 lorsque le nombre de données écrites NW est égal au nombre de données d'un paquet, et mise à 1 si le nombre N de données disponibles dans la mémoire 10 est nul et le nombre de données écrites NW est égal au nombre de données d'un paquet. L'activation du signal RDYW met à 0 le nombre de données écrites NW.

La figure 2 représente un chronogramme illustrant le fonctionnement du circuit de la figure 1 à l'aide d'un exemple de réorganisation de paquet de huit données 1 à 8. Dans cet exemple, les données sont à écrire selon la succession :
1, 2, 3, 4, 5, 6, 7, 8
et les données doivent sortir de la mémoire 10 selon la succession :
2, 1, 4, 3, 5, 8, 6, 7.
Ainsi, les rangs de sortie des mots 1 à 8 sont respectivement :
2, 1, 4, 3, 5, 7, 8, 6.

Les valeurs X associées à chaque donnée écrite sont
0, 2, 0, 2, 1, 0, 0, 3.

A un instant t₀, la mémoire 10 est vide, le nombre N est nul et le signal RDYW est activé. Le signal d'écriture W est alors successivement activé pour écrire les huit données dans la mémoire 10.

Le nombre N est nul jusqu'au moment où on écrit la donnée 2, c'est-à-dire la donnée de rang d'entrée 2 et de rang de sortie 1. Le nombre N est alors incrémenté de 2 et le signal RDYR est activé, ce qui provoque des activations successives du signal de lecture R pour lire les données dans la mémoire 10 par exemple, à la fréquence du signal d'écriture. On lit d'abord la donnée 2, le nombre N passe à 1, puis la donnée 1, le nombre N passe à 0 en provoquant la désactivation du signal RDYR.

Lorsque la donnée 4 est écrite dans la mémoire 10, le nombre N est incrémenté de 2, cette incrémentation se produisant dans l'exemple de la figure 2 lorsque le nombre N est devenu nul après la lecture de la donnée 1. Le signal RDYR est de nouveau activé et la lecture des données reprend.

On lit la donnée 4, le nombre N passe à 1, puis on lit la donnée 3. Entre temps, on a écrit la donnée 5 et le nombre N a été incrémenté de 1. Au moment de la lecture de la donnée 3, le nombre N passe à 1, on lit la donnée 5, le nombre N passe à 0 en désactivant le signal RDYR.

Le nombre N est incrémenté de 3 à l'écriture de la donnée 8, la dernière donnée du paquet. Le signal RDYW est désactivé et le signal RDYR est activé. On lit successivement les données 8, 6 et 7, le nombre N passant à 2, puis à 1 et enfin à 0.

Lorsqu'on a lu la donnée 7, la mémoire 10 est vide. Le signal RDYW est de nouveau activé, ce qui permet l'écriture d'un nouveau paquet de huit données.

On observe que le temps de latence du circuit de réorganisation selon l'invention, c'est-à-dire le décalage entre la fin de l'écriture d'un paquet et la fin de sa lecture est de trois cycles de lecture, ce qui correspond à la valeur maximale de l'incrément X.

Bien entendu, un circuit de réorganisation selon l'invention peut être prévu pour effectuer plusieurs réorganisations que l'on choisit grâce à un bus FCT (figure 1) qui détermine la fonction de décodage du décodeur 18 et la fonction de génération d'adresses de lecture RA du circuit de commande 12.

Un circuit de réorganisation selon l'invention est particulièrement utile pour effectuer le filtrage dans un codage ou décodage de blocs d'image selon les normes MPEG. Dans de tels circuits de codage ou décodage, les données sont traitées par ce que l'on appelle des macroblocs correspondant à des blocs d'image de 16x16 pixels.

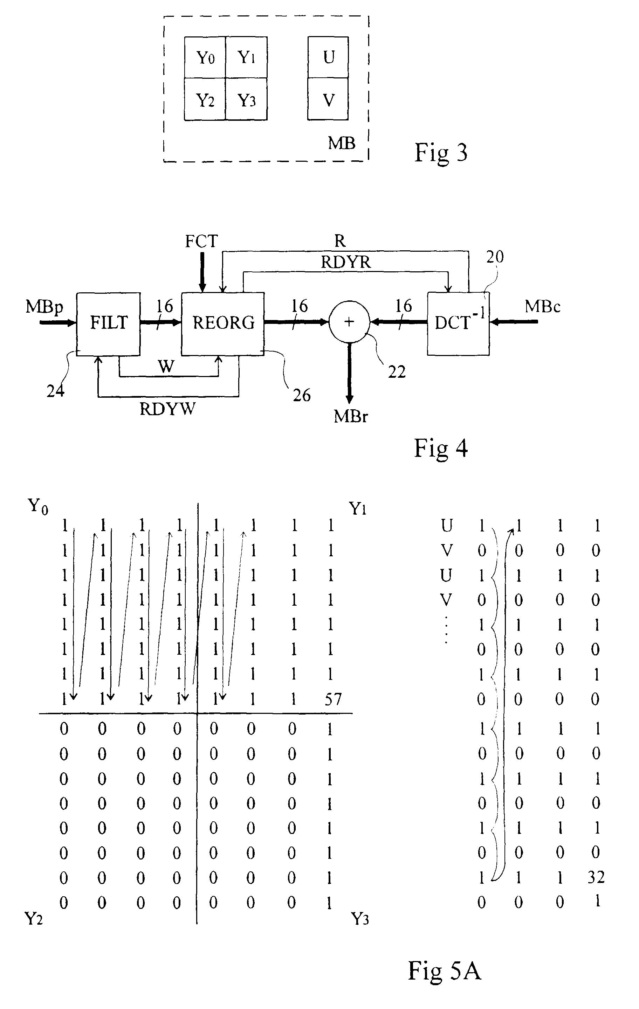

La figure 3 illustre un exemple de format, noté 4:2:0, d'un macrobloc MPEG. Ce macrobloc comprend un bloc de luminance formé de quatre blocs Y0 à Y3 de 8x8 pixels et un bloc de chrominance formé de deux blocs U et V de 8x8 pixels. Un autre format possible est le format noté 4:2:2 où le bloc de chrominance comprend deux blocs de 8x16 pixels. Un macrobloc du format 4:2:0 est constitué d'un paquet de 384 pixels de 8 bits.

La figure 4 représente schématiquement une partie de circuit de décodeur MPEG effectuant le filtrage des macroblocs. Un macrobloc couramment décodé MBc est fourni à un circuit de transformée cosinus discrète (DCT) inverse 20.

La sortie du circuit DCT 20 est sommée par un additionneur 22 à la sortie d'un filtre 24, dit filtre demi-pixel, pour obtenir un macrobloc reconstruit MBr. Le filtre 24 reçoit des macroblocs MBp, dits macroblocs prédicteurs, provenant d'une image précédemment reconstruite. L'ordre d'arrivée des pixels au filtre 24 est différent de l'ordre de sortie des pixels du circuit DCT. Par conséquent, il faut prévoir à la sortie du filtre 24 un circuit de réorganisation 26 qui est avantageusement un circuit de réorganisation selon l'invention. Le signal d'écriture W et le signal RDYW sont échangés entre le circuit 26 et le filtre 24. Le signal de lecture R et le signal RDYR sont échangés entre le circuit 26 et le circuit DCT 20.

Les données fournies par le filtre 16 et par le circuit DCT sont sur 16 bits, correspondant chacune à une paire de pixels.

En outre, le circuit DCT fournit des macroblocs sous forme entrelacée ou progressive indépendamment du fait que les macroblocs prédicteurs fournis au filtre 24 peuvent également être fournis sous forme entrelacée ou progressive. Ainsi, on a quatre possibilités de réorganisation possibles qui sont sélectionnées par le bus FCT.

Les figures 5A à 5D sont destinées à illustrer des exemples de chacune de ces réorganisations. Elles représentent des tableaux des incréments X associés à chaque paire de pixels d'un macrobloc écrite dans la mémoire 10 du circuit de réorganisation. On considère que ces figures font partie intégrante de la présente description.

La figure 5A illustre une réorganisation de macroblocs dans le cas où les macroblocs sont fournis par le filtre 24 sous forme progressive et fournis à l'additionneur 22 également sous forme progressive.

Les paires de pixels fournis par le filtre 24 arrivent, par exemple, par colonnes de 16 paires de pixels en balayant de haut en bas et de gauche à droite, d'abord les blocs de luminanoe Y puis les blocs de chrominance U et V. Plus précisément, les blocs de luminance Y arrivent en alternant une colonne du bloc Y0 et une colonne du bloc Y2 puis, une fois que les blocs Y0 et Y2 sont arrivés, en alternant une colonne du bloc Y1 et une colonne du bloc Y3. Les blocs de chrominance U et V arrivent en alternant une paire de pixels U et une paire de pixels V. Les paires de pixels sont écrites dans le circuit de réorganisation dans leur ordre d'arrivée.

Les paires de pixels sont relues, par exemple, par colonnes de 8 paires de pixels de haut en bas et de gauche à droite, de manière à fournir de façon complète successivement les blocs Y0, Y1, Y2, Y3, U et V, ce qui est illustré partiellement par des flèches.

On constate dans le tableau de la figure 5A que la plus grande valeur de X est 57, ce qui veut dire que la latence du circuit de réorganisation est, dans ce cas, de 57 cycles de lecture sur 192 paires de pixels écrites.

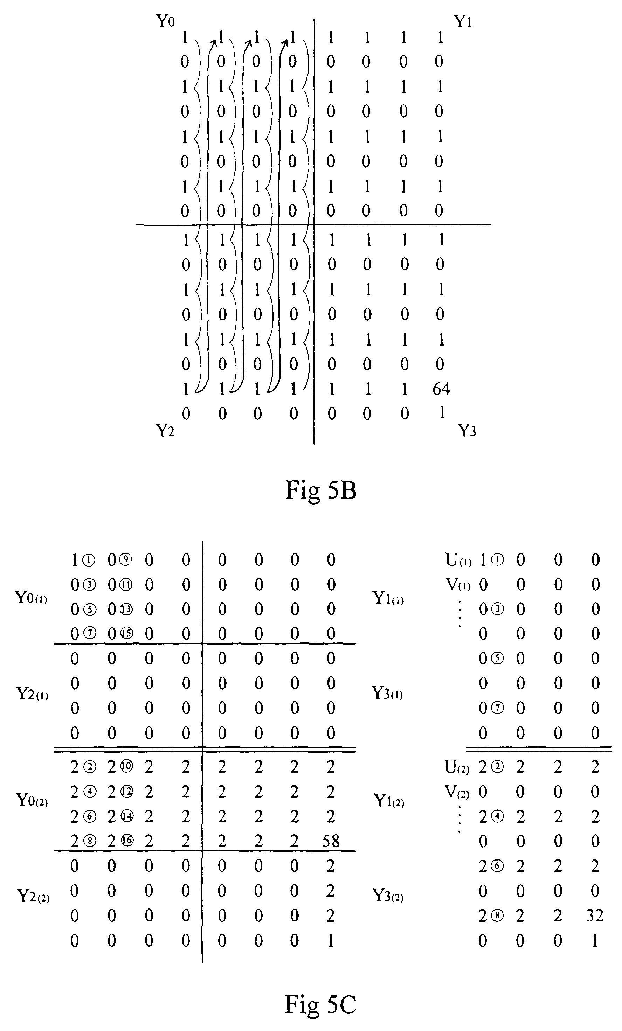

La figure 5B représente une réorganisation de macroblocs dans le cas où les macroblocs sont fournis sous forme progressive par le filtre 24 alors que l'additionneur 22 les reçoit sous forme entrelacée. Les paires de pixels sont écrites dans le circuit de réorganisation 26 de la même manière que ci-dessus.

Les paires de pixels sont relues par colonnes de manière à fournir les paires de pixels de lignes impaires des blocs successifs Y0, Y2, Y1, Y3, puis les paires de pixels de lignes paires des blocs successifs Y0, Y2, Y1, Y3. Les blocs de chrominance sont relus de la même manière que dans le cas de la figure 5A.

On remarque que la latence dans ce cas est de 64 cycles de lecture.

La figure 5C illustre une réorganisation dans le cas où le filtre 24 fournit des macroblocs sous forme entrelacée et où ils sont fournis à l'additionneur 22 sous forme progressive.

Les paires de pixels fournis par le filtre 24 arrivent par colonnes de 8 paires de pixels en balayant de haut en bas et de gauche à droite les blocs de luminanoe impairs (Y0(1) à Y3(1)), les blocs de luminance pairs (Y0(2) à Y3(2)), les blocs de chrominance impairs (U(1) et V(1)), et enfin les blocs de chrominance pairs U(2) et V(2). Un bloc impair, affecté de (1), ne contient que les paires de pixels de lignes impaires du bloc complet correspondant et un bloc pair, affecté de (2), ne contient que les paires de pixels de lignes paires du bloc complet correspondant. Chacun des blocs impairs et pairs (de luminance et de chrominance) arrive de la même manière que le bloc complet correspondant dans la figure 5A, sauf que chaque bloc impair ou pair ne contient que 4 paires de pixels dans ses colonnes.

Les paires de pixels sont relues de manière à fournir par colonnes de 8 paires de pixels successivement les blocs complets Y0, Y1, Y2, Y3, U et V. L'ordre de lecture est partiellement représenté par des nombres entourés. Par exemple, pour reconstituer la première colonne du bloc YO, on lit les première à quatrième paires de pixels de façon alternée dans les blocs Y0(1) et Y0(2). Les blocs U et V sont reconstitués de manière similaire.

On remarque que la latence du circuit de réorganisation dans ce cas est de 58 cycles de lecture.

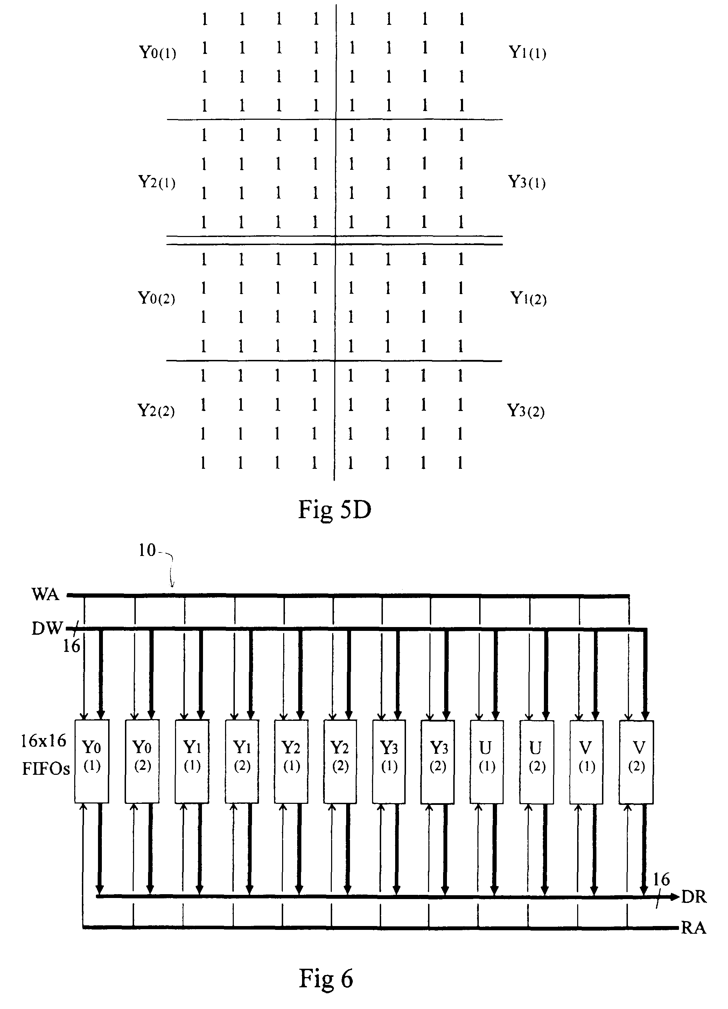

La figure 5D illustre une réorganisation dans le cas où le filtre 24 fournit des macroblocs sous forme entrelacée qui doivent être fournis à l'additionneur 22 sous forme entrelacée.

Les blocs sont écrits dans le circuit de réorganisation selon ce qui a été décrit en relation avec la figure 5C et sont relus dans le même ordre. En fait, le circuit de réorganisation n'est pas utile dans ce cas. Tous les incréments X sont à 1 et le temps de latence est d'un cycle de lecture.

Dans cette application à un circuit de traitement MPEG, comme pour le cas général, le circuit de réorganisation interdit de commencer l'écriture d'un nouveau paquet de données (nouveau macrobloc) tant que le paquet précédent n'a pas été lu. Ainsi, les données ne peuvent pas être fournies en flot continu au circuit de réorganisation.

Une solution classique pour éviter cet inconvénient consisterait à utiliser une mémoire tampon précédant le circuit de réorganisation, dont la capacité correspond au nombre de données écrites pendant la latence du circuit de réorganisation.

Le traitement MPEG se prête particulièrement bien à l'utilisation de deux circuits de réorganisation selon l'invention connectés en parallèle pour traiter les pixels à écrire en flot continu. Par exemple, le premier réorganise les blocs de luminance Y0 à Y3, et le deuxième les blocs de chrominance U et V, ce qui est facile à prévoir car les blocs de luminance et de chrominance correspondent à des paquets bien différenciés (les pixels de chrominance ne sont pas mélangés aux pixels de luminance, aussi bien en entrée qu'en sortie). La mémoire utilisée correspond alors à un macrobloc et il est inutile d'augmenter cette mémoire par l'adjonction d'une mémoire tampon.

La figure 6 représente un mode de réalisation particulièrement avantageux d'une mémoire à double accès à utiliser dans un circuit de réorganisation selon l'invention adapté à un traitement d'images MPEG. Cette mémoire comprend 12 mémoires tampon, du type premier-entré/premier-sorti (FIFO), de 16 mots de 16 bits chacun. Le bus d'écriture DW est relié à toutes les entrées de ces mémoires FIFO et le bus de lecture DR est relié à toutes les sorties de ces mémoires FIFO. Le bus d'adresses d'écriture WA comprend, par exemple, 12 lignes sélectionnant chacune des mémoires FIFO en écriture, et le bus d'adresses de lecture RA comprend, par exemple, 12 lignes sélectionnant chacune des mémoires FIFO en lecture.

Chacune des mémoires FIFO est destinée à contenir les paires de pixels de rang pair ou les paires de pixels de rang impair de chaque bloc de 8x8 pixels d'un macrobloc. De cette manière, les paires de pixels peuvent être fournis dans le bon ordre dans chacun des quatre cas précédemment décrits en utilisant un adressage particulièrement simple et une structure de mémoire à double accès peu coûteuse.

## Revendications

1. Procédé de réorganisation de données, comprenant les étapes suivantes :
- écrire les données dans une mémoire à double accès (10) dans un premier ordre prédéterminé ;
- lire les données dans la mémoire dans un deuxième ordre prédéterminé ;
caractérisé en ce qu'il comprend les étapes suivantes :
- à chaque écriture d'une donnée courante, incrémenter un registre (14) d'un incrément (X) dont la valeur optimale est égale à 1 plus la différence entre le rang d'entrée de la donnée et le rang de sortie de cette donnée, et nulle si la différence est négative, la valeur effective de cet incrément étant telle que la somme des incréments utilisés jusqu'à l'écriture de la donnée courante est inférieure ou égale à la somme des valeurs optimales de ces incréments ;
- autoriser la lecture des données seulement si le contenu du registre est non nul ; et
- décrémenter le registre à chaque lecture.

2. Procédé de réorganisation selon la revendication 1, caractérisé en ce qu'il comprend l'étape d'interdire l'écriture des données entre l'instant où l'écriture d'un paquet de données se termine et l'instant où la lecture de ce paquet de données se termine.

3. Circuit de réorganisation de données, comprenant une mémoire à double accès (10) couplée à un système pour écrire des données dans un premier ordre prédéterminé à l'aide d'un premier bus (DR, WA) et pour lire ces données dans un deuxième ordre prédéterminé à l'aide d'un deuxième bus (DR, RA), caractérisé en ce qu'il comprend :
- un registre (14) couplé au circuit de réorganisation pour autoriser les lectures de la mémoire seulement si le contenu du registre est non nul ;
- des moyens (R) pour décrémenter le contenu du registre à chaque lecture d'une donnée dans la mémoire ;
- un décodeur (18) des adresses présentes sur le premier bus pour fournir un incrément (X) dont la valeur optimale est égale à 1 plus la différence entre le rang d'entrée de la donnée courante présentée sur le premier bus et le rang de sortie de cette donnée, et nulle si la différence est négative, la valeur effective de cet incrément étant telle que la somme des incréments utilisés jusqu'à l'écriture de la donnée courante est inférieure ou égale à la somme des valeurs optimales de ces incréments ; et
- un sommateur (16) pour ajouter l'incrément au contenu du registre à chaque écriture.

4. Circuit de réorganisation selon la revendication 3, caractérisé en ce qu'il comprend un compteur d'écriture (12-1) incrémenté à chaque écriture d'une donnée et remis à zéro à la fin de chaque lecture d'un paquet de données, et des moyens pour inhiber les écritures tant que le compteur d'écriture est à sa valeur maximale.

## Patentansprüche

1. Verfahren zur Datenreorganisation, welches die folgenden Verfahrensschritte umfaßt:
- die Daten werden in einer ersten vorgegebenen Reihenfolge in einen Speicher (10) mit doppeltem Zugriff bzw. Zugang geschrieben;
- die Daten in dem Speicher werden in einer vorgegebenen zweiten vorgegebenen Reihenfolge gelesen;
**dadurch gekennzeichnet,** daß das Verfahren die folgenden Verfahrensschritte umfaßt:
- bei jedem Einschreiben eines laufenden Datums wird ein Register (14) um ein Inkrement (X) inkrementiert, dessen optimaler Betrag gleich 1 plus der Differenz zwischen dem Eingangsrang des Datums und dem Ausgangsrang dieses Datums ist und Null ist, wenn die Differenz negativ ist, wobei der tatsächliche Betrag dieses Inkrements solcher Art ist, daß die Summe der bis zum Schreiben des laufenden Datums angewendeten Inkremente kleiner oder gleich der Summe der optimalen Werte dieser Inkremente ist;
- das Lesen der Daten ist nur erlaubt bzw. autorisiert, wenn der Inhalt des Registers nicht Null ist;
- bei jedem Lesevorgang wird das Register dekrementiert.

2. Reorganisationsverfahren nach Anspruch 1, dadurch gekennzeichnet, daß es den Verfahrensschritt umfaßt, wonach das Einschreiben von Daten zwischen dem Zeitpunkt, in welchem das Einschreiben eines Datenpakets beendet ist, und dem Zeitpunkt, in welchem das Auslesen dieses Datenpakets beendet ist, gesperrt ist.

3. Schaltung zur Datenreorganisation, mit einem Speicher (10) mit doppeltem Zugriff bzw. Zugang, der mit einem System zum Schreiben von Daten in einer ersten vorgegebenen Reihenfolge mit Hilfe eines Bus (DR,WA) und zum Lesen dieser Daten in einer zweiten vorgegebenen Reihenfolge mit Hilfe eines zweiten Bus (DR,RA) verbunden ist,
**dadurch gekennzeichnet,** daß die Schaltung umfaßt:
- ein mit der Reorganisationsschaltung verbundenes Register (14), welches die Lesevorgänge aus dem Register nur erlaubt bzw. autorisiert, wenn der Inhalt des Registers nicht Null ist;
- Mittel (R) zum Dekrementieren des Registerinhalts bei jedem Lesen eines Datums in dem Speicher;
- einen Dekoder (18) für auf dem ersten Bus anliegende Adressen, zur Bildung eines Inkrements (X), dessen optimaler Betrag gleich 1 plus der Differenz zwischen dem Eingangsrang des auf dem ersten Bus präsentierten laufenden Datums und dem Ausgangsrang dieses Datums ist, und Null beträgt, falls die Differenz negativ ist, wobei der tatsächliche Wert dieses Inkrements solcher Art ist, daß die Summe der bis zum Einschreiben des laufenden Datums angewendeten Inkremente kleiner oder gleich der Summe der optimalen Beträge dieser Inkremente ist; sowie
- einen Addierer (16), der bei jedem Schreibvorgang das Inkrement zum Inhalt des Registers hinzufügt.

4. Reorganisationsschaltung nach Anspruch 3, dadurch gekennzeichnet, daß sie einen Schreibzähler (12-1) aufweist, der bei jedem Einschreiben eines Datums inkrementiert und am Ende jedes Auslesens eines Datenpakets auf Null rückgestellt wird, sowie Mittel zum Inhibieren bzw. Sperren von Schreibvorgängen, solange der Schreibzähler seinen maximalen Zählbetrag besitzt.

## Claims

1. A data reorganization process, including the following steps:
- writing words in a dual-port memory (10) in a first predetermined order;
- reading-out the words from the memory in a second predetermined order;
characterized in that it comprises the following steps:
- each time a current word is written, incrementing a register (14) by an increment (X) whose optimum value is equal to 1 plus the difference between the input rank of the word and the output rank of this word, said increment being zero if the difference is negative, the effective value of said increment being such that the sum of the increments that are used until the current word is written is lower than, or equal to, the sum of the optimum values of these used increments;
- authorizing reading of the words only if the content of the register is non-zero; and
- decrementing the register at each read.

2. The reorganization process of claim 1, characterized in that it includes the step of inhibiting the writing of words between the time when the writing of a packet of words is ended and the time when the reading of this packet is ended.

3. A data reorganization circuit, including a dual-port memory (10) coupled to a system to write words in a first predetermined order with a first bus (DR, WA) and to read said words in a second predetermined order with a second bus (DR, RA), characterized in that it comprises:
- a register (14) connected to the reorganization circuit to authorize the reading of the memory only if the content of the register is non-zero;
- circuitry (R) for decrementing the content of the register each time a word is read in the memory;
- a decoder (18) for decoding addresses present on the first bus to provide an increment (X) whose optimum value is equal to 1 plus the difference between the input rank of the current word provided on the first bus and the output rank of this word, and whose value is zero if the difference is negative, the effective value of this increment being such that the sum of the increments used until the writing of the current word is lower than, or equal to, the sum of the optimal values of these used increments; and
- an adder (16) for adding the increment to the content of the register at each write.

4. The reorganization circuit of claim 3, characterized in that it includes a write counter (12-1) that is incremented each time a word is written, and reset at the end of each reading of a packet of words, and circuitry for inhibiting writing as long as the write counter is at a maximum value.
